(19) Europäisches Patentamt
European Patent Office
Office européen des brevets

(11) **EP 3 709 253 A1**

(12) **EUROPEAN PATENT APPLICATION**

(43) Date of publication:
**16.09.2020  Bulletin 2020/38**

(21) Application number: **19162893.2**

(22) Date of filing: **14.03.2019**

(51) Int Cl.:
*G06Q 50/06* (2012.01)     *G06Q 50/30* (2012.01)
*G06Q 30/02* (2012.01)     *G06Q 20/22* (2012.01)
*G06Q 20/36* (2012.01)     *G06Q 20/38* (2012.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft**
**80809 München (DE)**

(72) Inventors:
• **Batir, Sean**
  **Mountain View, CA California 94043 (US)**
• **Pease, Henry**
  **San Francisco, CA California 94117 (US)**
• **Langton, Adam**
  **San Francisco, CA California 94129 (US)**
• **Harrington, Alissa**
  **Oakland, CA California 94610 (US)**

(54) **A SYSTEM FOR PROCESSING AND STORING CHARGE EVENT INFORMATION, A METHOD TO PROCESS AND STORE CHARGE EVENT INFORMATION AND A COMPUTER-READABLE MEDIUM**

(57)    The reduction of green house gas is a key challenge for the automotive industry. Proposed credit based system are not sufficient in providing the necessary transparency and flexibility to suit all participants in the value chain.

The invention thereofre provides a system for processing and storing charge event information (100), comprising:
- a vehicle (101) with a rechargable battery (102) adapted to store electric energy to supply electric energy to at least one electric component (103) of the vehicle (101);
- a distributed ledger system (310) adapted to store charge event information (107, 200) of the rechargable battery (102);
wherein the distributed ledger system (310) is being adapted to compute an environmental credit (315) based on the charge event information (107, 200) and is being adapted to store the environmental credit (315) in a wallet (313, 314) of the distributed ledger (310).

Fig. 1

**Description**

The present invention is directed towards a system for processing and storing charge event information, a method to process and store charge event information and a computer readable medium.

Different types of fuels that are used to power vehicles have different impact on the environment. For example, diesel-based fuels have a higher impact than electricity generated using renewable resources. It is one of the key challenges in the automotive industry to reduce the impact vehicles have on the environment by reducing green house gas emissions. For this, it is known to calculate the carbon intensity of each fuel over its entire life cycle. This includes production, transport, distribution and using the fuel.

In order to create market incentives to use low carbon fuels it is known to establish a credit-based system.

In a credit based system, for example according to the California Low Carbon Fuel Standard, credits may be generated for the consumption and creation of energy with a carbon intensity lower than a baseline carbon intensity. In addition, fuels that are above the baseline carbon intensity, generative negative credits.

The generated credits may subsequently be sold to parties in need of credits. If a party has a negative credit score at the end of a planning period, penalties may be imposed by the regulating authorities.

Implementing a credit based system poses a plurality of technical challenges. For example, the generation and the exchange of these credits is highly intransparent. This is due to the fact that credits are being sold in private auctions to holders of negative credit scores. Thus, the market price as well as the quantities sold are not publically available.

Furthermore, tracking the use of electricity in the private sector is extremely difficult. In private households, usually a single meter is installed to measure electricity. As a result, it is not possible to measure which percentage of the electricity consumed by a household is directed towards charging a vehicle parked in a garage.

One possible solution to this problem is to install multiple meters in each household. However, this creates the disadvantage that the car owner and/or the car manufacturer cannot retrieve credits for charges being carried out outside of its own home.

It is therefore an object of the present invention to increase transparency of a credit system to reduce greenhouse gas. It is further in particular an object of the present invention to create a transparent market that is auditable by the public. Even more, it is in particular an object of the invention to enable a customer, a car manufactorer or an energy supplier to retrieve credits in a credit-based system.

The object of the present invention is solved by the subject matter of claims 1, 14 and 17.

The object is in particular solved by a system for processing and storing charge event information, comprising:

- a vehicle with a rechargeable battery adapted to store electric energy to supply electric energy to at least one electric component of the vehicle;

- a distributed ledger system adapted to store charge event information of the rechargeable battery,

wherein the distributed ledger system is being adapted to compute an environmental credit based on the charge event information and is being adapted to store the environmental credit in a wallet of the distributed ledger.

Distributed ledger systems provide the ability to review a publically accessible trail of all transactions stored by the distributed ledger. In addition, the data can be retrieved at any time by any user of the distributed ledger system. Thus, using a distributed ledger system to store environmental credits provides the ability for each user of the distributed ledger system to review the creation and storing of the environmental credits.

In addition, with the present invention, the distributed ledger system is adapted to compute the environmental credit. Thus, the computation of the environmental credit is highly transparent and reviewable by each user of the distributed ledger system.

Furthermore, with the present invention it is possible that the vehicle itself creates the charge event information and provides the charge event information to the distributed ledger system. As a result, it is possible in each location and independent of the source of energy to compute a credit based on the charge event information. As a result, it is not necessary to have separate meters in a household of a consumer.

In one embodiment, the distributed ledger system is an Ethereum based or hyperledger based system. In one embodiment, the vehicle is an electric vehicle and the at least one electric component is implemented as an electric motor. In one embodiment, the vehicle is a hybrid vehicle.

In one embodiment, the charge event information indicates an amount of energy obtained by the rechargeable battery during a charge of the rechargeable battery.

Consequently, the creation of the credit can be based on the amount of energy obtained. In particular, it is possible to create more than one credit depending on the amount of energy charged.

In one embodiment, the charge event information indicates temporal data, in particular a start time and an end time of a charge of the rechargeable battery.

Providing temporal data as part of the charge event information allows the prevention of double-dipping, i.e. retrieving credits for the same charge twice.

In one embodiment, the charge event information indicates contextual data, the contextual data indicating the ownership of a green tariff, comprising a Boolean value indicating whether a current carbon intensity of an energy grid is greater than an average carbon intensity of the energy grid and/or indicating onsite generation of energy on behalf of an owner of the vehicle.

Contextual data can therefore provide information that is required to compute an environmental credit. For example, the ownership of a green tariff can indicate who is allowed to retrieve the environmental credit for the particular tariff.

A Boolean value indicating whether a current carbon intensity of an energy grid is greater than an average carbon intensity of the energy grid can indicate whether a credit can be obtained at all or how many. In case the carbon intensity is higher than the average carbon intensity of the energy grid, no credit may be computed or a negative number may be computed. Lastly, it can also be beneficial to include information indicating onsite generation of energy on behalf of an owner of the vehicle. For example, solar power may be used to charge the vehicle which is owned and maintained by a third company. Still, the onsite energy generation means are maintained on behalf of the owner of the vehicle. As a result, the owner of the vehicle may retrieve the environmental credit from the distributed ledger system, i.e. store the credit in a wallet associated with the owner of the vehicle.

In one embodiment, the distributed ledger system is adapted to compute the environmental credit using a computer program.

Thus, the distributed ledger system itself uses a computer program to compute the environmental credit, resulting in an increased transparency of the credit generation. In particular, as the computer program is public, therefore the public is entitled to review the program code. Only if the program code fulfills the requirements of the regulation, the generated credits of the distributed ledger system may be accepted by all participants.

In one embodiment the computer program is adapted to compute the environmental credit only if the charge event information indicates that the current carbon intensity of an energy grid is lower than the average carbon intensity of the energy grid.

As a result, the computation of the environmental credit can be directly dependent upon the current carbon intensity as well as an average, or a baseline carbon intensity of an energy grid.

Consequently, the system provides an incentive using market mechanisms to reduce the carbon intensity to charge the vehicle.

In one embodiment, the distributed ledger system comprises a plurality of nodes, the nodes being adapted to store transaction data in a blockchain and validating the transactions using a consensus algorithm.

Storing transactions in a blockchain provides means to store data immutable. Thus, the data cannot be altered once stored in the blockchain, in particular, as a consensus algorithm is used to validate each transaction. Only if an attacker is able to accumulate more than 50 % of computing power in the network of the nodes participating in the blockchain, a permanent change in the data stored in the blockchain is possible. Thus, in all practical scenarios, altering a blockchain is not possible. In conclusion, the aforementioned embodiment provides a secure implementation of storing transactions and therefore storing the assignment of credits to particular nodes in a network. A node in a network in one embodiment can also mean a participant or even be implemented as a vehicle.

In one embodiment, the computer program is implemented as a smart contract that is adapted to be executed by all nodes of the distributed ledger system when a node of the distributed ledger systems sends a currency value of the distributed ledger system to the smart contract.

Thus, the distributed ledger system may provide a programming language and an execution environment such that individual programs, i.e. smart contracts, may be executed by all nodes in the network. As a result, the distributed ledger system guarantees that the computation of the environmental credits is performed in a manner that is known to all participants in a network.

In one embodiment, the distributed ledger system is adapted to store a transaction of the environmental credit from the first node to a second node in the/a blockchain of the distributed ledger system.

Thus, it is also possible to send an environmental credit to another party, represented by a second node. This allows to create a credit clearance market wherein participants of the market can exchange environmental credits to their liking.

In one embodiment, a wallet of a node is a collection of associations of at least one environmental credit with respect to the node.

Thus, a wallet may be implemented as a dictionary that stores an association between the environmental credit and the node. As a result it is always known to all participants in the distributed ledger system which nodes own how many credits.

In one embodiment, the wallet stores an identification number identifying the vehicle.

Thus, it is further possible to include the vehicle that originated in the creation of the environmental credit in the wallet of a node. As a result, a node can also be implemented by the vehicle itself.

In one embodiment, the environmental credit indicates a difference of the carbon intensity of the electricity used to charge the rechargeable battery and the baseline carbon intensity.

The environmental credit itself can thus also relate to the carbon intensity. As a result, it is possible to infer from the number of credits stored in a wallet how well the user associated with the wallet performs with respect to the baseline carbon intensity.

In one embodiment, the carbon intensity indicates a lifecycle carbon intensity of a fuel including emissions with producing, transporting, distributing and/or using the fuel.

Thus, the carbon intensity is an efficient means to mirror the entire life cycle of the fuel used to charge the battery. Thus, the environmental effect of the fuel over its entire life cycle is taken into consideration. This helps in preventing a one-sided view on the efficiency of a respective fuel.

For example, the creation of LNG is more energy-intensive than electricity. However, a vehicle using LNG has the same or roughly the same greenhouse gas emissions as an electric vehicle.

The object of the present invention is further in particular solved by a method to process and store charge event information, in particular implemented by a system as described above, the method comprising the following steps:

- receiving, at a node of a distributed ledger system, charge event information from a vehicle;

- computing, based on the charge event information, an environmental cred it;

- storing the environmental credit in a wallet of the distributed ledger system.

In one embodiment, the method may comprise exchanging the stored environmental credit with a node of the distributed ledger system whose wallet indicates a negative credit score balance, the exchange being stored in a block chain of the distributed ledger system.

In one embodiment, the exchanging the stored environmental credit may comprise an exchange of a pecuniary resource in exchange for the environmental credit.

Thus, it is now also possible to exchange an environmental credit for, for example, real-world currency. In another example, it is possible to exchange environmental credit with a currency implemented by the distributed ledger system.

The object of the present invention is further in particular solved by a computer-readable medium storing instructions that when executed by at least one processor implement a method as described above.

The advantages of the method and the computer-readable medium are similar to the advantages described with respect to the system.

In the following, embodiments of the invention are described with respect to figures. The figures showing:

Fig. 1  a schematic of a system with vehicle charging electricity;

Fig. 2  a schematic of telematics data;

Fig. 3  a schematic of a distributed ledger system;

Fig. 4  a credit clearance market; and

Fig. 5  a flow chart representing a method to process and store charge event information.

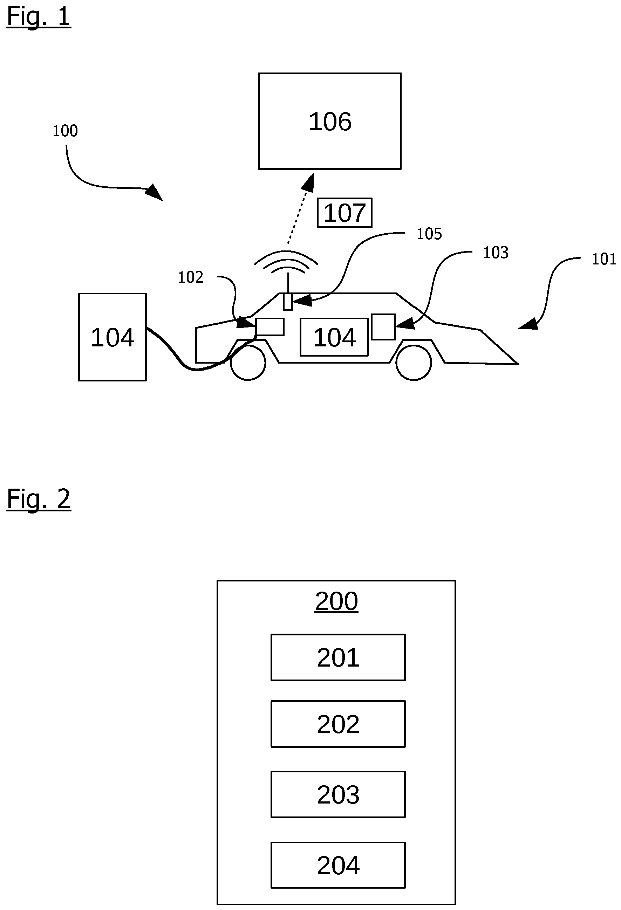

Fig. 1 illustrates a system for processing a storing charge event information 100 comprising a vehicle 101, a battery charging station 104 and a cloud server 106. The vehicle 101 comprises an electric motor 103 which is powered by a rechargeable battery 102. Once the rechargeable battery 102 is depleted, the rechargeable battery 102 can be charged using a charging station 104.

The charging station 104 is connected to a power grid. The electric energy supplied by the battery charging station 104 can thus be of different origin.

In one embodiment, the energy provided by the battery charging station 104 stems from a renewable energy source, e.g. solar panels.

In one embodiment, information about the source of the electricity provided by the battery charging station 104 can be transmitted to the vehicle 101 using the connector of the battery charging station 104 to transmit the energy.

During the charging process of the battery 102, a vehicle computing unit 104 records telematics data 107 about the charging process. For example, the telematics data 107 comprises information on the start time, the end time and the amount of supplied energy to the vehicle 101. Moreover, the telematics data may comprise information on the source of the energy as supplied by the battery charging station 104.

Once the charging is completed, the telematics data 107 is transmitted via a vehicle communication unit 105 to a cloud server 106. For this, a public telephone infrastructure can be used, for example, 5G infrastructure. As a result, the communication unit 105 can be an LTE, UMTS or GSM module. The cloud server 106 can be located anywhere in the world. Moreover, it is also considered that the cloud server 106 comprises a plurality of multiple servers arranged in a computing center.

The telematics data 107, also called charge event information, may also comprise a unique vehicle identification number making it possible to efficiently track the energy charged by one particular vehicle.

Fig. 2 illustrates one potential embodiment of the telematics data 200. In the embodiment of Fig. 2, telematics data 200 comprises vehicle information 201, temporal information 202, energy information 203 and location information 204. The vehicle information may comprise a unique identification number, identifying the vehicle 101. In addition, the manufacturer of the vehicle 101 may be identified as well. Optionally, the vehicle information 201 may comprise information about the used rechargeable battery 102 of the vehicle 101.

The temporal information 202 may comprise the start and the end time of a charge. In addition, a duration of the charge and/or time zone information may be comprised by the temporal information 202.

The energy information 203 may comprise information on the amount of energy charged, the type of energy charged, i.e. the source of the electrical energy charged, as well as information on a green tariff.

Location information 204 may comprise information on the location of the vehicle 101 when charged. In addition, the location information 204 may comprise information on the geolocation of the battery charging station 104.

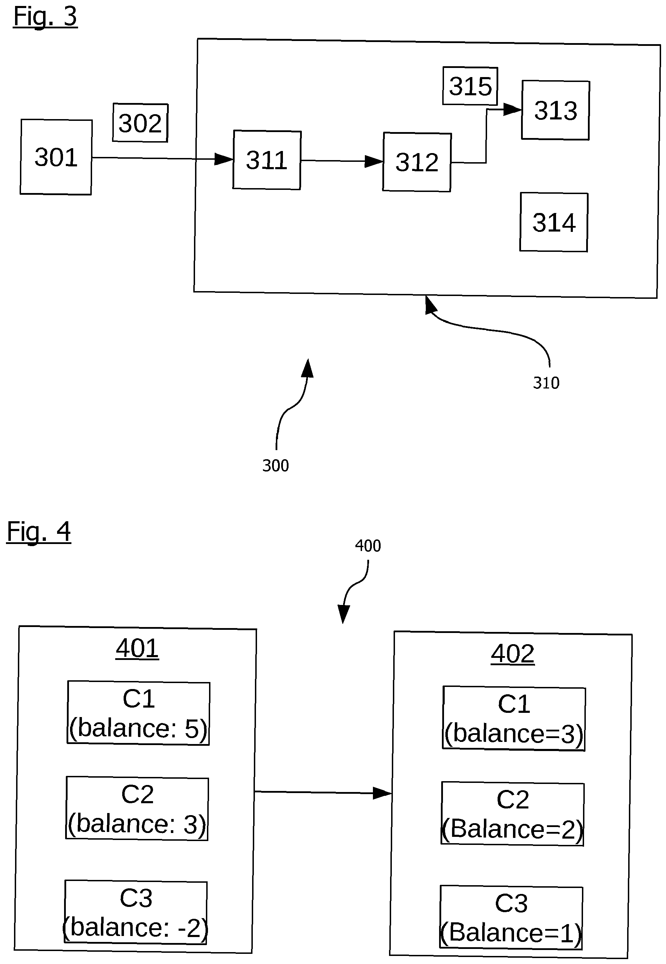

Fig. 3 illustrates a distributed ledger system 300. The distributed ledger system 300 comprises a distributed ledger 310 as well as a cloud server 301 which can be the cloud server 106 of Fig. 1. The cloud server 301 is adapted to send telematics, i.e. charge event information 302, to a node 311 of the distributed ledger 310. The telematics data 302 can be the telematics data 107 or 200. The ledger node 311 is adapted to publish the telematics data 302 into a publically accessible blockchain. For this, the ledger node 311 sends the telematics data 302 to a smart contract 312 which is executed by all of the nodes of the distributed ledger system 310. The smart contract is implemented as a computer program running in a specific execution environment on each ledger node 311.

The smart contract 312 is adapted to compute environmental credits 315 and store the environmental credits in a wallet 314, 315 that is assigned to the vehicle 101 or the owner of the vehicle 101.

The smart contract in one embodiment implements the computation of the number of environmental credits 315 to be generated according to the following formula:

$$Credits = \left(CI_{standard} - \frac{CI_{electricity}}{EER}\right) * Enegery\ Desnity * EER * Electricity\ units * 10^{-6}$$

EER denotes the Energy Econonomy Ration, which is a dimensionless value that represents the efficiency of a fuel as used in a powertrain as compared to a reference fuel, such as gasoline. $CI_{standard}$ denotes the Carbon Intesity baseline value of a sepcific time frame, e.g. $96.50 gCO_2e/MJ$ for gasoline substitute and $99.97 gCO_2e/MJ$ for diesel substitute. The CI for electricity is $105.16 gCO_2e/MJ$ with an Energy Densisty of $3.6 MJ/kWh$. The EER for light/medium duty electric vehicles is 3.4 and for electric buses 4.2.

Once it is determined how many environmental credits 315 are based on the telematics data 302, the respective environmental credits 315 are assigned to the wallet of the vehicle 101 or the respective owner of the vehicle 101.

In a further embodiment, the environmental credits 315 are assigned to a wallet of the car manufacturer or the supplier of the electric energy. Thus, the distributed ledger system 300 is highly flexible and can be adapted to suit a variety of different needs.

Fig. 4 illustrates an example of a credit clearance market 400. The credit clearance market 400 allows trading of the generated environmental credits 315. Thus, entities that require further environmental credits 315 because, for example, they utilize fuels that have a carbon intensity above the average or baseline carbon intensity can buy credits to prevent penalties by the respective regulation authorities.

Thus, the credit clearance market 400 illustrates two states of wallet balances for different entities. In state 401, a first entity C1 has a balance of five credits, a second entity C2 has a balance of three credits and a third entity C3 has a balance of minus two credits. Consequently, the third entity C3 requires two credits to prevent penalties by the regulation authorities. Thus, using the distributed ledger system 300, the third entity C3 is able to buy credits from the first and second entity C1, C2. For example, the third entity C3 may initialize a transaction being stored in the distributed ledger system 300 that indicates a transaction of two credits from the first entity in exchange for a certain amount of money. Alternatively, it is also possible that a new currency is used in the distributed ledger system 300, just like the well-known bitcoin currency. Thus, credits may be exchanged for this new currency.

Block 402 illustrates a second state of the credit clearance market 400, wherein the third entity C3 has purchased three credits from the first and second entity C1, C2. As can be seen from the balance of the entity C3, two credits were bought from the first entity C1 and one credit was bought from the second entity C2. As a result, the balance of the third entity now is one. As can be seen from the example of a credit clearance market 400, the present invention provides a transparent means to trade environmental credits and therefore facilitating the utilization market effects to lower greenhouse gas emissions to take full effect.

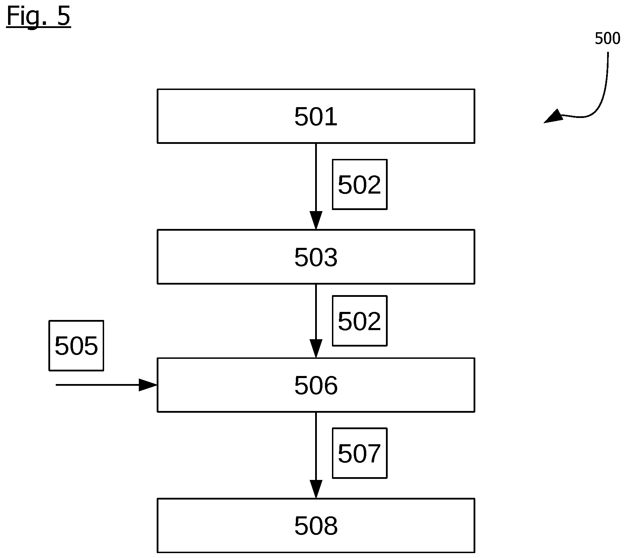

Fig. 5 is a flow chart illustrating a method to process and store charge event information. In a first charge step 501, the rechargeable battery 102 of a vehicle 101 is charged using a battery charging station 104. During the charge, telematics data 502 is generated and sent to a cloud server 106 that stores the telematics data 502 in a reception and storeing step 503. The telematics data 502 is subsequently sent to a smart contract of a distributed ledger system 300. As a result, in a computation step 506, the telematics data 502 is used to compute an environmental credit 507. In addition to the telematics data 502, the computation step 506 utilizes a carbon intensity baseline value 505 that is preset by a regulating authority. Thus, the telematics data 502 as well as the carbon intensity baseline value are used to compute the environmental credit 507. In the storing step 508, the environmental credit 507 is stored to a wallet of the vehicle 101. As a result, the vehicle 101 or the vehicle owner may in a later step exchange the obtained environmental credit 507 for some pecuniary value.

It is noted that all of the described embodiment may be combined in any manner and are thus also disclosed in any combination. The addition or the removal of features meantioned in any embodiment is additionaly disclosed.

Reference numerals:

| | |
|---|---|
| 100 | System |
| 101 | Electric vehicle |
| 102 | rechargeable battery |
| 103 | electric motor |
| 104 | Battery charging station |
| 104 | Vehicle computing unit |
| 105 | Vehicle communication unit |
| 106, 301 | Cloud server |
| 107, 200 | Telematics data |
| 201 | Vehicle information |
| 202 | Temporal information |
| 203 | Energy information |
| 204 | Location information |
| 300 | Distributed Ledger System |
| 302 | Telematics data / Charge event information |
| 310 | Distributed ledger |
| 311 | Node |
| 312 | Smart contract |
| 313 | First Wallet |
| 314 | Second Wallet |
| 315 | Credit |
| 400 | Credit Clearance Market |
| 401, 402 | Balance status |
| 500 | Method to process and store charge event information |
| 501 | Charge step |
| 502 | charge event information/telematics data |
| 503 | cloud server reception and storing step |
| 505 | carbon intensity baseline value |
| 506 | computation step |
| 507 | environmental credit |
| 508 | storing step |
| C1, C2, C3 | Credit keeping entity/regulated entity |

**Claims**

1. System for processing and storing charge event information (100), comprising:

   - a vehicle (101) with a rechargable battery (102) adapted to store electric energy to supply electric energy to at least one electric component (103) of the vehicle (101);
   - a distributed ledger system (310) adapted to store charge event information (107, 200) of the rechargable battery (102);

   **characterized in that**
   the distributed ledger system (310) is being adapted to compute an environmental credit (315) based on the charge event information (107, 200) and is being adapted to store the environmental credit (315) in a wallet (313, 314) of the distributed ledger (310).

2. The system according to claim 1,
   **characterized in that**
   the charge event information (107, 200) indicating an amount of energy obtained by the rechargable battery (102) during a charge of the rechargable battery (102).

3. The system according to any of the precedings claims,
   **characterized in that**
   the charge event infromation (107, 200) indicating temporal data, in particular a start time and an end time of a charge of the rechargable battery (102).

4. The system according to any of the precedings claims,
   **characterized in that**
   the charge event infromation (107, 200) indicating contextual data, the contextual data indicating the ownership of a green tarrif, comprising a boolean value indicating whether a current carbon intensity of an energy grid is greater than an average carbon intensity of the energy grid and/or indicating onsite generation of energy on behalf of an owner of the vehicle (101).

5. The system according to any of the preceding claims,
   **characterized in that**
   the distributed ledger system (310) is adapted to compute the environmental credit (315) using a computer program (312).

6. The system according to any of the preceding claims, in particular according to claim 5,
   **characterized in that**
   the computer program (312) is adapted to compute the environmental credit (315) only if the charge event information (107, 200) indicates that the current carbon intensity of an energy grid is lower than an average carbon intensity of the energy grid.

7. The system according to any of the preceding claims,
   **characterized in that**
   the distributed ledger system (310) comprises a plurality of nodes, the nodes being adapted to store transaction data in a blockchain and validating the transactions using a consensus algorithm.

8. The system according to any of the preceding claims, in particular according to claim 6,
   **characterized in that**
   the computer program is implemented as a smart contract (312) that is adapted to be exeucted by all nodes of the distributed ledger system (310) when a node of the distributed ledger system (310) sends a currency value of the distributed ledger system (310) to the smart contract (312).

9. The system according to any of the preceding claims, in particular according to claim 8,
   **characterized in that**
   the distributed ledger system (310) is adapted to store a transaction of the environmental credit (315) from a first node to a second node to a bloackchain of the distributed ledger system (310).

**10.** The system according to any of the preceding claims, in particular according to claim 7
**characterized in that**
a wallet (313, 314) of a node is a collection of associations of at least one environmental credit (315) with the respective node.

**11.** The system according to any of the preceding claims,
**characterized in that**
the wallet (313, 314) stores an identifcation number identifying the vehicle (101).

**12.** The system according to any of the preceding claims,
**characterized in that**
the environmental credit (315) indicates a difference of the carbon intensity of the electricity used to charge the rechargable battery (102) and a baseline carbon intensity.

**13.** The system according to any of the preceding claims, in particular according to claim 12,
**characterized in that**
carbon intensity indicates a lifecycle carbon intensity of a fuel including emmisions with producing, transporting, distributing and/or using the fuel.

**14.** A method to process and store charge event information (107, 200), in particluar implemented by a system (100) according to any of the preceding claims, the method comprising the following steps:

- receiving, at a node of a distributed ledger system (310), charge event information (107, 200) from a vehicle (101);
- computing, based on the charge event information (107, 200,), an environmental credit (315);
- storing the environmental credit (315) in a wallet (313, 314) of the distributed ledger system (310).

**15.** The method according to claim 14,
**characterized by**
exchanging the stored environmental credit (315) with a node of the distributed ledger system (310) whos wallet indicates a negativ credit score balance, the exchange being stored in a blockchain of the distributed ledger system (310).

**16.** The method according to claim 15,
**characterized in that**
exchanging the stored environmental credit (315) comprises an exchange of a pecuniary resource in exchange for the environmetal credit (315).

**17.** A computer readable medium storing instructions that when executed by at least one processor implement a method according to any of the claims 14-16.

Fig. 1

Fig. 2

Fig. 3

Fig. 4

Fig. 5

500

```
┌─────────────────────────────┐
│             501             │
└─────────────────────────────┘
               │
               │   ┌─────┐
               │   │ 502 │
               ▼   └─────┘
┌─────────────────────────────┐
│             503             │
└─────────────────────────────┘
               │
               │   ┌─────┐
               │   │ 502 │
┌─────┐        ▼   └─────┘
│ 505 │ ┌─────────────────────────────┐
└─────┘ │             506             │
     ──▶└─────────────────────────────┘
               │
               │   ┌─────┐
               │   │ 507 │
               ▼   └─────┘
┌─────────────────────────────┐
│             508             │
└─────────────────────────────┘
```

Europäisches
Patentamt

European
Patent Office

Office européen
des brevets

# EUROPEAN SEARCH REPORT

**Application Number**

EP 19 16 2893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/299852 A1 (ORSINI LAWRENCE [US]) 18 October 2018 (2018-10-18) <br> * paragraph [0010] * <br> * paragraph [0019] - paragraph [0031] * <br> * paragraph [0043] - paragraph [0048] * <br> * paragraph [0052] - paragraph [0053] * <br> * paragraph [0055] * <br> * paragraph [0079] * <br> * paragraph [0106] * <br> * figures 2-4 * | 1-17 | INV. <br> G06Q50/06 <br> G06Q50/30 <br> G06Q30/02 <br> G06Q20/22 <br> G06Q20/36 <br> G06Q20/38 |
| X | WO 2010/039239 A2 (SILVER SPRING NETWORKS INC [US]; FITZGERALD SEAN M [US] ET AL.) 8 April 2010 (2010-04-08) <br> * paragraph [0005] * <br> * paragraph [0016] - paragraph [0032] * <br> * paragraph [0036] - paragraph [0046] * <br> * paragraph [0058] * <br> * paragraph [0076] * <br> * paragraph [0093] - paragraph [0094] * <br> * paragraph [0097] * <br> * figure 5C * | 1-17 | |
| X | US 2009/313103 A1 (AMBROSIO RONALD [US] ET AL) 17 December 2009 (2009-12-17) <br> * paragraph [0056] - paragraph [0076] * <br> * paragraph [0091] - paragraph [0102] * <br> * paragraph [0108] - paragraph [0118] * <br> * figure 10 * | 1-17 | TECHNICAL FIELDS SEARCHED (IPC) <br><br> G06Q |
| X | US 2010/006356 A1 (CURRY DAVE EARL [US] ET AL) 14 January 2010 (2010-01-14) <br> * paragraph [0119] - paragraph [0131] * | 1-17 | |
| X | WO 2017/136956 A1 (ROYAL BANK OF CANADA [CA]) 17 August 2017 (2017-08-17) <br> * paragraph [0005] - paragraph [0016] * <br> * paragraph [0065] - paragraph [0087] * <br> * paragraph [0096] - paragraph [0110] * | 1-17 | |

The present search report has been drawn up for all claims

| Place of search | Date of completion of the search | Examiner |
|---|---|---|
| The Hague | 17 September 2019 | Marcu, Antoniu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 16 2893

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2019

| Patent document cited in search report | | Publication date | Patent family member(s) | | Publication date |
|---|---|---|---|---|---|
| US 2018299852 | A1 | 18-10-2018 | NONE | | |
| WO 2010039239 | A2 | 08-04-2010 | AR | 074654 A1 | 02-02-2011 |
| | | | AU | 2009300319 A1 | 08-04-2010 |
| | | | BR | PI0920433 A2 | 22-12-2015 |
| | | | CA | 2739267 A1 | 08-04-2010 |
| | | | CN | 102388397 A | 21-03-2012 |
| | | | EP | 2353128 A2 | 10-08-2011 |
| | | | HK | 1166170 A1 | 05-08-2016 |
| | | | JP | 5651594 B2 | 14-01-2015 |
| | | | JP | 2012508912 A | 12-04-2012 |
| | | | KR | 20110086810 A | 01-08-2011 |
| | | | RO | 126975 A2 | 30-12-2011 |
| | | | RU | 2011117560 A | 10-11-2012 |
| | | | TW | 201015463 A | 16-04-2010 |
| | | | US | 2010228601 A1 | 09-09-2010 |
| | | | US | 2010235209 A1 | 16-09-2010 |
| | | | WO | 2010039239 A2 | 08-04-2010 |
| US 2009313103 | A1 | 17-12-2009 | US | 2009313103 A1 | 17-12-2009 |
| | | | US | 2012191524 A1 | 26-07-2012 |
| US 2010006356 | A1 | 14-01-2010 | US | 2010006356 A1 | 14-01-2010 |
| | | | WO | 2011014757 A2 | 03-02-2011 |
| WO 2017136956 | A1 | 17-08-2017 | CA | 3014392 A1 | 17-08-2017 |
| | | | EP | 3414713 A1 | 19-12-2018 |
| | | | US | 2019073666 A1 | 07-03-2019 |
| | | | WO | 2017136956 A1 | 17-08-2017 |

EPO FORM P0459

For more details about this annex : see Official Journal of the European Patent Office, No. 12/82